# EUROPEAN PATENT APPLICATION

(11) **EP 3 951 817 A1**
(43) Date of publication of application: **09.02.2022**
(21) Application number: 20776322.8
(22) Date of filing: 18.03.2020
(51) Int. Cl.: H01G 11/12, H01G 11/78, H01M 2/10

(54) **ELECTRICITY STORAGE DEVICE**

(30) Priority: 28.03.2019 JP 2019063340
(71) Applicant: GS Yuasa International Ltd., Kisshoin, Minami-ku, Kyoto-shi, Kyoto 601-8520 (JP)
(72) Inventor: MIYAWAKI, Yasutaka, Kyoto-shi, Kyoto 601-8520 (JP)
(74) Representative: Grünecker Patent- und Rechtsanwälte PartG mbB
(86) International application number: PCT/JP2020/012116
(87) International publication number: WO 2020/196190

(57) **Abstract**

An energy storage apparatus (10) includes an energy storage device (100) and a spacer (200) disposed on one side of the energy storage device (100) in a first direction. The spacer (200) includes: a bulging portion (212) extending in a second direction that intersects with the first direction and bulging toward at least one of one side in the first direction and the other side in the first direction; and a flat plate portion (211) disposed on one side of the bulging portion (212) in the second direction.

## Description

### TECHNICAL FIELD

The present invention relates to an energy storage apparatus that includes energy storage devices and spacers.

### BACKGROUND ART

Conventionally, there has been popularly known an energy storage apparatus that includes energy storage devices and spacers. Patent Document 1 discloses a battery module (energy storage apparatus) where a plurality of battery cells (energy storage devices) are stacked in a state where holders (spacers) are sandwiched.

### PRIOR ART DOCUMENTS

### PATENT DOCUMENTS

Patent Document 1: JP-A-2012-256466

### SUMMARY OF THE INVENTION

### PROBLEMS TO BE SOLVED BY THE INVENTION

However, in the conventional energy storage apparatus that has the above-mentioned configuration, there is a possibility that the spacer is deformed. In the energy storage apparatus (battery module) disclosed in the above-mentioned Patent Document 1, a body portion of the spacer (holder) is bent in a wave plate shape for forming a plurality of cooling air passages through which cooling air flows between the spacer and the energy storage device (battery cell). With such a configuration, when the energy storage device swells, the spacer is pressed against the energy storage device. As a result, the spacer is deformed in a stretching manner. Inventors of the present application have found that, in the conventional energy storage apparatus having the above-mentioned configuration, there is a possibility that the spacer is deformed (or stretched).

Accordingly, it is an object of the present invention to provide an energy storage apparatus that can suppress the deformation of a spacer.

### MEANS FOR SOLVING THE PROBLEMS

An energy storage apparatus according to one aspect of the present invention includes: an energy storage device; and a spacer disposed on one side of the energy storage device in a first direction, wherein the spacer includes: a bulging portion extending in a second direction that intersects with the first direction and bulging toward at least one of one side in the first direction and the other side in the first direction; and a flat plate portion disposed on one side of the bulging portion in the second direction.

The present invention can be realized not only as such an energy storage apparatus but also as a spacer that the energy storage apparatus includes.

### ADVANTAGES OF THE INVENTION

According to the energy storage apparatus of the present invention, the deformation of the spacer can be suppressed.

### BRIEF DESCRIPTION OF THE DRAWINGS

Fig. 1 is a perspective view illustrating an external appearance of an energy storage apparatus according to an embodiment.
Fig. 2 is an exploded perspective view of the energy storage apparatus according to the embodiment illustrating respective constituent elements when the energy storage apparatus is disassembled.
Fig. 3 is a perspective view illustrating the configuration of an energy storage device according to the embodiment.
Fig. 4 is a perspective view illustrating the configuration of a spacer according to the embodiment.
Fig. 5 is a front view illustrating the configuration where the energy storage device is disposed with respect to the spacer according to the embodiment.
Fig. 6 is a cross-sectional view illustrating the configuration where the energy storage device is disposed with respect to the spacer according to the embodiment.
Fig. 7 is a cross-sectional view illustrating the configuration where the energy storage device is disposed with respect to the spacer according to the embodiment.

### MODE FOR CARRYING OUT THE INVENTION

An energy storage apparatus according to one aspect of the present invention includes: an energy storage device; and a spacer disposed on one side of the energy storage device in a first direction, wherein the spacer includes: a bulging portion extending in a second direction that intersects with the first direction and bulging toward at least one of one side in the first direction and the other side in the first direction; and a flat plate portion disposed on one side of the bulging portion in the second direction.

With such a configuration, in the energy storage apparatus, the spacer disposed on one side of the energy storage device in the first direction includes: the bulging portion that extends in the second direction; and the flat plate portion that is disposed on one side of the bulging portion in the second direction. As described above, with respect to the spacer, by arranging the flat plate portion in the extending direction of the bulging portion, even when the bulging portion is indented, the flat plate portion can suppress the spacer from being stretched in the direction that intersects with the extending direction of the bulging portion. Accordingly, even when the energy storage device swells so that the spacer is pressed against the energy storage device, the deformation of the spacer can be suppressed.

The bulging portion may include: a first bulging portion extending in the second direction and bulging toward one side in the first direction; and a second bulging portion disposed adjacently to the first bulging portion, extending in the second direction, and bulging toward the other side in the first direction.

With such a configuration, with respect to the spacer, the bulging portion includes the first bulging portion that bulges toward one side in the first direction and the second bulging portion that bulges toward the other side in the first direction. As described above, the bulging portion of the spacer bulges in both directions and hence, a stress generated when the energy storage device swells can be further alleviated by the bulging portion. Accordingly, when the energy storage device swells, a force that the energy storage device deforms the spacer can be alleviated and hence, the deformation of the spacer can be further suppressed.

The spacer may include a plurality of the bulging portions disposed in a spaced-apart manner from each other in a third direction that intersects with the first direction and the second direction, and the flat plate portion may be disposed on one side of the plurality of the bulging portions in the second direction.

With such a configuration, the spacer includes the plurality of bulging portions disposed in a spaced-apart manner from each other, and the flat plate portion is disposed on one side of the plurality of bulging portions in the second direction. As described above, since the spacer has the plurality of bulging portions, a stress generated when the energy storage device swells can be dispersed in the plurality of bulging portions. With respect to the spacer, the flat plate portion is disposed on one side of the plurality of bulging portions in the second direction. Accordingly, the flat plate portion can suppress the spacer from being stretched even when the respective bulging portions are indented. As a result, the deformation of the spacer can be further suppressed.

The energy storage device may have a protruding portion that protrudes toward the flat plate portion.

In the energy storage apparatus, there may be a case where the energy storage device has a protruding portion. To facilitate the welding of a container of the energy storage device or to increase a welding strength, there is a case where a thickness of the welded portion is increased by forming a protruding portion on a welded portion of the container. There may also be a case where an opening of a container body may be expanded by forming a protruding portion on a lid body side of the container body so that contents such as an electrode assembly can be easily put into the container. In forming the protruding portion on the energy storage device in this manner, the protruding portion is made to protrude toward the flat plate portion of the spacer. With such a configuration, it is possible to suppress the interference between the protruding portion of the energy storage device and the bulging portion of the spacer. Accordingly, it is possible to suppress the deformation (damage) of the spacer caused by the interference between the protruding portion and the bulging portion.

The spacer may further include: a protrusion that is disposed on one side of the bulging portion in the second direction or on the other side of the bulging portion in the second direction, and extends in a third direction that intersects with the first direction and the second direction.

With such a configuration, the spacer has the protrusion extending in the third direction on the side of the bulging portion. In this manner, by forming the protrusion on the spacer, the spacer can be reinforced on the side of the bulging portion. Accordingly, the deformation of the spacer can be further suppressed.

Hereinafter, an energy storage apparatus according to an embodiment (and its modification) of the present invention is described with reference to drawings. The embodiment described hereinafter describes a comprehensive or specific example of the energy storage apparatus. In the following embodiment, numerical values, shapes, materials, constituent elements, arrangement positions and connection modes of the constituent elements, manufacturing steps, the order of the manufacturing steps, and the like are provided as examples, and are not intended to limit the present invention. In the respective drawings, sizes and the like are not strictly illustrated.

In the description made hereinafter and drawings, an arrangement direction of a pair of electrode terminals of one energy storage device, a direction that a pair of short side surfaces of a container of one energy storage device face each other, an arrangement direction of a pair of side members, or an arrangement direction of the energy storage device and side members are defined as an X axis direction. An arrangement direction of the plurality of energy storage devices, an arrangement direction of a plurality of spacers, an arrangement direction of a pair of end members, an arrangement direction of the energy storage devices, the spacers, and the end members, a direction that a pair of long side surfaces of the container of one energy storage device faces each other, or a thickness direction of the energy storage devices, the spacers, or the end members are defined as a Y axis direction. An arrangement direction of a container body and a lid of the energy storage device, an arrangement direction of the energy storage devices, a bus bar holding member, and bus bars, or a vertical direction is defined as the Z axis direction. These X axis direction, Y axis direction, and Z axis direction are directions that intersect with each other (orthogonal to each other in this embodiment). A case is considered where the Z axis direction is not the vertical direction depending on a use mode. However, in the description made hereinafter, for the sake of convenience of the description, the description is made by assuming the Z axis direction as the vertical direction.

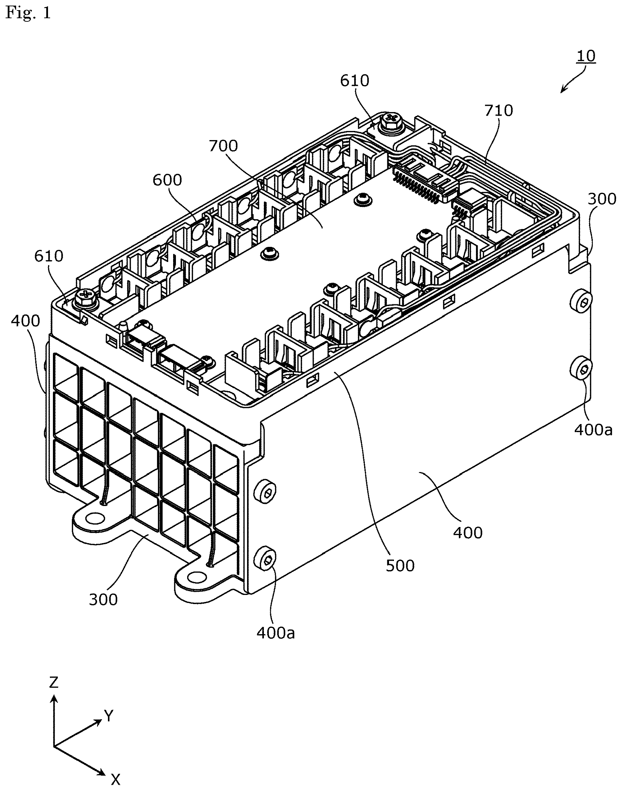

In the description made hereinafter, an X-axis plus direction indicates an arrow direction of the X axis in respective drawings, and an X-axis minus direction indicates a direction opposite to the X-axis plus direction. The same goes for the Y axis direction and the Z axis direction. In the description made hereinafter, there may be a case where the Y axis direction is referred to as a first direction, the Z axis direction is referred to as a second direction, and the X axis direction is referred to as a third direction. In this case, a Y-axis plus direction is defined as one side of the first direction, and a Y-axis minus direction is defined as the other side of the first direction. A Z-axis plus direction is defined as one side of the second direction, and a Z-axis minus direction is defined as the other side of the second direction. Expressions indicating the relative directions or the relative postures such as "parallel" or "orthogonal" also include cases where such directions or postures are not taken in a strict meaning of the terms. A state where two directions are orthogonal to each other means not only a state where these two directions are completely orthogonal to each other but also a state where these two directions are substantially orthogonal to each other, that is, for example, a state where these two directions are not orthogonal to each other with slight deviation of approximately several percent. In the description of the embodiment made hereinafter, a case where the energy storage apparatus 10 illustrated in Fig. 1 is viewed in a direction toward the Y-axis plus direction.

### (Embodiment)

### [1 Overall description of energy storage apparatus 10]

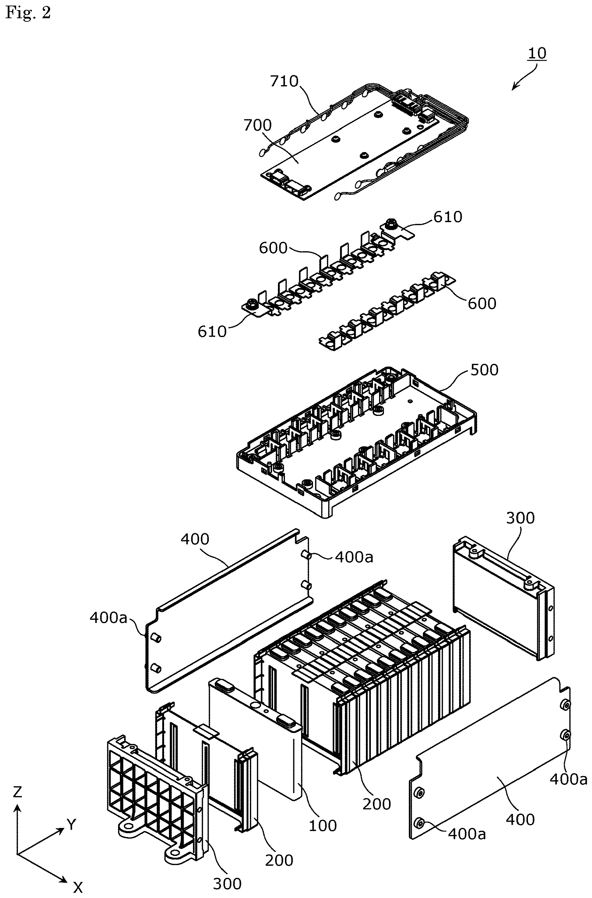

First, the configuration of an energy storage apparatus 10 is described. Fig. 1 is a perspective view illustrating an external appearance of the energy storage apparatus 10 according to the embodiment. Fig. 2 is an exploded perspective view of the energy storage apparatus 10 according to the embodiment illustrating respective constituent elements when the energy storage apparatus is disassembled.

The energy storage apparatus 10 is an apparatus in which electricity is charged from the outside and from which electricity is discharged. In the embodiment, the energy storage apparatus 10 has an approximately rectangular parallelepiped shape. The energy storage apparatus 10 is a battery module (assembled battery) used as an electricity storage apparatus, a power source, or the like. To be more specific, the energy storage apparatus 10 is used as a battery or the like for driving a mobile body such as an automobile, a motorcycle, a watercraft, a snowmobile, an agriculture machine, a construction machine, or a railway vehicle for an electric railway, or for starting an engine of the mobile body. As the above-mentioned automobile, an electric vehicle (EV), a hybrid electric vehicle (HEV), a plugin hybrid electric vehicle (PHEV), and a gasoline automobile are exemplified. As the above-mentioned railway vehicle for an electric railway, an electric train, a monorail, and a linear motor car are exemplified. The energy storage apparatus 10 can also be used as a stationary battery or the like used as a home-use battery, a generator, or the like.

As illustrated in Fig. 1 and Fig. 2, the energy storage apparatus 10 includes a plurality of energy storage devices 100, a plurality of spacers 200, a pair of end members 300, a pair of side members 400, a bus bar holding member 500, a plurality of bus bars 600, and a substrate 700.

The energy storage device 100 is a secondary battery (single battery) that can charge electricity and discharge electricity. More specifically, the energy storage device 100 is a nonaqueous electrolyte secondary battery such as a lithium ion secondary battery. The energy storage device 100 has a flat rectangular parallelepiped shape (prismatic shape), and is disposed adjacently to the spacers 200. That is, the plurality of respective energy storage devices 100 and the plurality of respective spacers 200 are arranged in the Y axis direction in a state where the energy storage devices 100 and the spacers 200 are alternately arranged. In the embodiment, thirteen spacers 200 are respectively arranged at positions where these spacers 200 sandwich twelve respective energy storage devices 100 respectively.

The number of energy storage devices 100 is not limited to twelve, and may be plural other than twelve or one. The shape of the energy storage device 100 is not particularly limited. The energy storage device 100 may have any shape such as a polygonal columnar shape other than the rectangular parallelepiped shape, a circular columnar shape, an elliptical columnar shape, or an oblong circular columnar shape. Further, the energy storage device 100 may be a laminate-type energy storage device. The energy storage device 100 is not limited to a nonaqueous electrolyte secondary battery. The energy storage device 100 may be a secondary battery other than the nonaqueous electrolyte secondary battery, or may be a capacitor. The energy storage device 100 is not necessarily a secondary battery, and may be a primary battery that allows a user to use stored electricity even when the user does not charge the battery. Further, the energy storage device 100 may be a battery that uses a solid electrolyte. The detailed configuration of the energy storage device 100 is described later.

The spacer 200 is a spacer having a rectangular shape and a plate shape that is disposed in the Y-axis plus direction or in the Y-axis minus direction with respect to the energy storage device 100. The spacer 200 electrically insulates the energy storage device 100 and the other member from each other. More specifically, the spacer 200 is disposed between two energy storage devices 100 disposed adjacently to each other, and between the energy storage device 100 at end portions of the energy storage apparatus 10 and end members 300. The spacer 200 provides insulation between these two energy storage devices 100 and between the energy storage device 100 at the end portions of the energy storage apparatus 10 and the end members 300. In this embodiment, thirteen spacers 200 are disposed corresponding to twelve energy storage devices 100. However, when the number of energy storage devices 100 is other than twelve, the number of spacers 200 is also changed corresponding to the number of energy storage devices 100.

The spacer 200 is formed so as to cover a long side surface (a long side surface portion 121 described later) of the energy storage device 100. The spacer 200 is formed so as to also cover an approximately half of a front surface side or a back surface side (the Y-axis minus direction side or the Y-axis plus direction side) of short side surfaces (short side surface portions 122 described later) of the energy storage device 100. That is, a recessed portion is formed on both surfaces on a front surface side or a back surface side (both surfaces in the Y axis direction) of the spacer 200, and an approximately half of the above-mentioned energy storage device 100 is inserted into the recessed portion. With such a configuration, two spacers 200 that sandwich the energy storage device 100 cover the short side surfaces of the energy storage device 100. Accordingly, it is possible to ensure electric insulation between the energy storage device 100 and side members 400.

The spacer 200 is made of an insulating resin material such as polycarbonate (PC), polypropylene (PP), polyethylene (PE), a polyphenylene sulfide resin (PPS), a polyphenylene ether (PPE (including modified PPE)), polyethylene terephthalate (PET), polyether ether ketone (PEEK), tetrafluoroethylene/perfluoroalkyl vinyl ether (PFA), polytetrafluoroethylene (PTFE), polybutylene terephthalate (PBT), polyether sulfone (PES), an ABS resin, or a composite material of the above-mentioned materials. The spacer 200 may be made of a material other than a resin provided that the spacer 200 has electric insulation. The spacer 200 may be made of ceramic, a damma material formed by stacking and joining mica flakes, or the like.
It may not always be the case where all of the plurality of spacers 200 are made of the same material. The configuration of the spacer 200 is described in further detail later.

The end members 300 and the side members 400 are members that press the energy storage devices 100 from the outside in the arrangement direction (Y axis direction) of the plurality of energy storage devices 100. That is, the end members 300 and the side members 400 press the respective energy storage devices 100 included in the plurality of energy storage devices 100 from both sides in the arrangement direction of the plurality of energy storage devices 100 by sandwiching the plurality of energy storage devices 100 from both sides in the arrangement direction.

More specifically, the end members 300 are end plates (sandwiching members) having a flat block shape, which are disposed on both sides of the plurality of energy storage devices 100 in the Y axis direction, and sandwich the plurality of energy storage devices 100 from both sides in the arrangement direction (Y axis direction) of the plurality of energy storage devices and hold the plurality of energy storage devices 100. From a viewpoint of ensuring a strength of the end member 300 and the like, the end member 300 is made of a metal-made (conductive) material such as aluminum, an aluminum alloy, stainless steel, iron, or a plated steel plate. A material of the end member 300 is not particularly limited. For example, the end member 300 may be made of an insulating material having a high strength, or insulation treatment may be applied to the end member 300. The end member 300 may be an end plate having a plate shape or the like in place of an end plate having a block shape.

The side members 400 are side plates (restraining members, restraining bars) having an elongated shape and a flat plate shape. The side members 400 are disposed on both sides of the plurality of energy storage devices 100 in the X axis direction, and both ends of the side members 400 are mounted on the end members 300 so that the side members 400 restrain the plurality of energy storage devices 100. That is, the side members 400 are disposed in an extending manner in the Y axis direction so as to stride over the plurality of energy storage devices 100 and the plurality of spacers 200, and impart a restraining force to the plurality of energy storage devices 100 and the plurality of spacers 200 in the arrangement direction (Y axis direction) of these members. In the embodiment, the pair of side members 400 is disposed on both sides of the plurality of energy storage devices 100 and the plurality of spacers 200 in the X axis direction. The pair of respective side members 400 is mounted on the end portions of the pair of end members 300 in the X axis direction at both end portions of the side members 400 in the Y axis direction. With such a configuration, the pair of side members 400 restrains the plurality of energy storage devices 100 and the plurality of spacers 200 by sandwiching the plurality of energy storage devices 100 and the plurality of spacers 200 from both sides in the X axis direction and from both sides in the Y axis direction.

The side members 400 are joined to the end members 300 by a plurality of joining members 400a arranged in the Z axis direction. In the embodiment, the joining members 400a are bolts that penetrate the side member 400 and are fastened to the end member 300. The side member 400 is, similarly to the end member 300, from a viewpoint of ensuring a strength of the side member 400 and the like, made of a metal-made (conductive) material such as aluminum, an aluminum alloy, stainless steel, iron, or a plated steel plate or the like. However, the side member 400 may be formed of an insulating member having a high strength, or insulating treatment may be applied to the side member 400. The side member 400 may be formed of a member having a block shape, a rod shape, or the like in place of a side plate having a plate shape.

The bus bar holding member 500 is a plate-shaped member (a bus bar plate, a bus bar frame) that can hold the bus bars 600, the substrate 700, and the like, can provide electrical insulation between the bus bars 600 or the like and other members, and can restrict the positions of the bus bars 600 and the like. The bus bar holding member 500 is made of an insulating resin material such as PC, PP, or PE similarly to the spacers 200.

The bus bars 600 are disposed above the plurality of energy storage devices 100, and are plate-shaped members having conductivity that electrically connect electrode terminals (electrode terminals 140 described later) of the plurality of energy storage devices 100 to each other. In the embodiment, the plurality of energy storage devices 100 are connected to each other in series by sequentially connecting a positive electrode terminal and a negative electrode terminal out of electrode terminals of the energy storage devices 100 disposed adjacently to each other by using a plurality of bus bars 600. External terminals 610 (a positive electrode external terminal, a negative electrode external terminal) that are terminals of the energy storage apparatus 10 are connected to the bus bars 600 disposed at end portions. In the embodiment, the bus bars 600 and the electrode terminals are connected to each other by laser welding. The bus bar 600 also includes a connecting portion of a wire for detecting a voltage or the like of the energy storage device 100, and the connecting portion is bent in the Z-axis plus direction. The bus bar 600 is formed of a conductive member made of metal such as copper, a copper alloy, aluminum, or an aluminum alloy. A mode of connecting energy storage devices 100 to each other is not particularly limited, and some of the energy storage devices 100 may be connected in parallel to each other. A method of connecting the bus bar 600 and the electrode terminal may be welding other than laser welding, and the bus bar 600 and the electrode terminal may be fastened to each other by screws in conformity with the shape of the electrode terminal.

The substrate 700 is a printed circuit board that is placed on the bus bar holding member 500. On the substrate 700, an electronic component for monitoring a charge state or a discharge state of the energy storage devices 100, fuses, relays, shunt resistors, connectors, and the like are disposed. Wires 710 are connected to the substrate 700 via a connector.
In the embodiment, the wires 710 are formed into a bundle and are connected to the substrate 700 at an end portion of the energy storage apparatus 10 in the Y-axis plus direction. The wires 710 include wires for measuring voltages of the energy storage devices 100, wires for measuring temperatures of the energy storage devices 100, and the like, and one ends of the wires are connected to connecting portions of the bus bars 600.

### [2 Description of configuration of energy storage device 100]

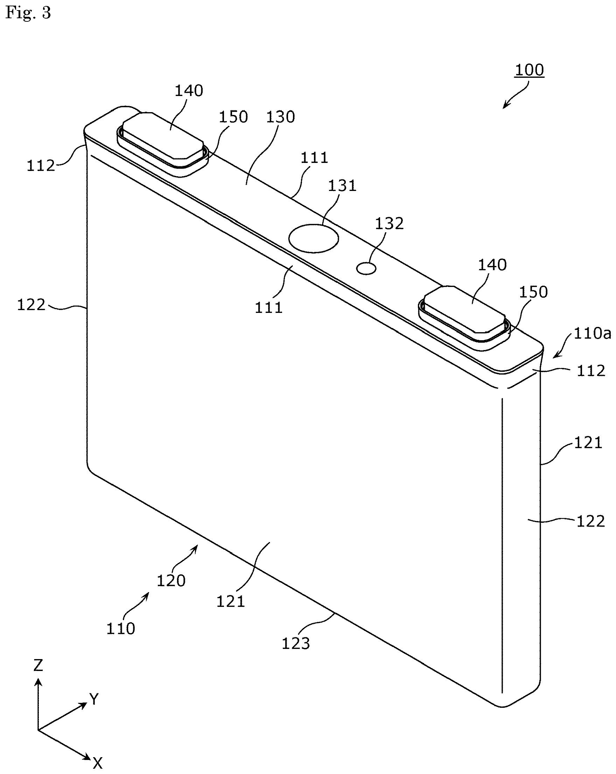

Next, the configuration of the energy storage device 100 is described in detail. Fig. 3 is a perspective view illustrating the configuration of the energy storage device 100 according to the embodiment.

As illustrated in Fig. 3, the energy storage device 100 includes a container 110, the pair of electrode terminals 140 (the positive electrode terminal and the negative electrode terminal), and a pair of gaskets 150.
In the container 110, an electrode assembly, current collectors (a positive electrode current collector and a negative electrode current collector), an electrolyte solution (nonaqueous electrolyte), and the like are housed. However, these constituent elements are not illustrated in the drawing. A kind of the electrolyte solution is not particularly limited provided that the performance of the energy storage device 100 is not impaired, and various kinds of electrolyte solutions can be selected. A spacer may be disposed on a side or the like of the current collector, and an insulating sheet that covers an outer surface of the container 110 may be disposed.

The container 110 is a container having a parallelepiped shape (prismatic shape). The container 110 includes: a container body 120 in which an opening is formed; and a lid body 130 that closes the opening of the container body 120. The container body 120 is a bottomed rectangular cylindrical member that forms a body portion of the container 110. The container body 120 has: a pair of long side surface portions 121 on side surfaces of the container body 120 on both sides in the Y axis direction; a pair of short side surface portions 122 on side surfaces of the container body 120 on both sides in the X axis direction; and a bottom surface portion 123 on the Z-axis minus direction side. The short side surface portions 122 are flat surfaces having a rectangular shape that are disposed adjacently to the pair of long side surface portions 121 and the bottom surface portion 123. The short side surface portion 122 has a smaller area than the long side surface portion 121. The bottom surface portion 123 is a flat surface having a rectangular shape that is disposed adjacently to the pair of long side surface portions 121 and the pair of short side surface portions 122. The long side surface portions 121 are flat surfaces having a rectangular shape that are disposed adjacently to the pair of short side surface portions 122 and the bottom surface portion 123. The long side surface portion 121 has a larger area than the short side surface portion 122. The lid body 130 is a plate-shaped member having a rectangular shape that forms a lid portion of the container 110. The lid body 130 is disposed on the Z-axis plus direction side of the container body 120. On the lid body 130, a gas release valve 131 that releases a pressure in the container 110 when such a pressure is increased, a solution filling portion 132 through which the container 110 is filled with an electrolyte solution, and the like are also mounted.

With such a configuration, the container 110 has the structure where the inside of the container 110 is sealed. Such sealed structure is obtained by joining the container body 120 and the lid body 130 to each other by welding or the like after the electrode assembly and the like are housed in the container body 120. The material of the container 110 (the container body 120 and the lid body 130) is not particularly limited. However, for example, it is preferable that the container 110 be made of metal that is weldable (joinable) such as stainless steel, aluminum, an aluminum alloy, iron, or a plated steel plate.

Further, the container 110 has a container protruding portion 110a that protrudes outward. The container protruding portion 110a is a protruding portion that is formed over the entire circumference of the lid body 130 and over the entire circumference of an end portion of the container body 120 on a lid body 130 side (Z-axis plus direction side). That is, the container protruding portion 110a has: a pair of long side surface protruding portions 111 formed on end portions of the pair of long side surface portions 121 on the Z-axis plus direction side; and a pair of short side surface protruding portions 112 formed on end portions of the pair of short side surface portions 122 on the Z-axis plus direction side. The pair of long side surface protruding portions 111 has a shape where the pair of long side surface protruding portions 111 extends in the X axis direction, and gradually expands in the Y axis direction (is inclined with respect to the Z axis direction) as the pair of long side surface protruding portions 111 extends toward the Z-axis plus direction. The pair of short side surface portions 122 has a shape where the pair of short side surface portions 122 extends in the Y axis direction, and gradually expands in the X axis direction (is inclined with respect to the Z axis direction) as the pair of short side surface portions 122 extends toward the Z-axis plus direction. In this manner, the container protruding portion 110a is a portion having a tapered shape that is formed of the pair of long side surface protruding portions 111, the pair of short side surface protruding portions 112, and a periphery portion of the lid body 130, and gradually protrudes outward as the container protruding portion 110a extends in the Z-axis plus direction.

Such a container protruding portion 110a is formed on the container 110 because of the following reason. To facilitate welding between the container body 120 and the lid body 130 or to increase a welding strength by increasing a thickness of a welded portion between the container body 120 and the lid body 130, there may be a case where the container protruding portion 110a is formed on the end portion of the container body 120 on the lid body 130 side. To facilitate putting of contents such as the electrode assembly into the container body 120 by widening the opening of the container body 120, there may be a case where the container protruding portion 110a is formed on the end portion of the container body 120 on the lid body 130 side. To position the container 110 in place with respect to another member, there may be a case where the container protruding portion 110a is formed so as to make the container engage with another member by fitting engagement or the like. In this case, with respect to the container 110, a center portion of the container body 120 is liable to swell. Accordingly, it is preferable to form the container protruding portion 110a on an end portion of the container body 120 (the end portion of the container body 120 on the lid body 130 side in the embodiment) that minimally swells.

The electrode terminals 140 are terminals (the positive electrode terminal and the negative electrode terminal) of the energy storage device 100 disposed on the lid body 130 of the container 110. The electrode terminals 140 are electrically connected to a positive electrode plate and a negative electrode plate of the electrode assembly via current collectors. That is, the electrode terminals 140 are members that are made of metal and are provided for discharging electricity stored in the electrode assembly to a space outside the energy storage device 100, and for charging electricity into a space in the energy storage device 100 to store electricity in the electrode assembly. The electrode terminals 140 are disposed such that the electrode terminals 140 protrude from the lid body 130 of the container 110 in the Z-axis plus direction. The electrode terminal 140 has a flat plate shape so that the electrode terminal 140 is surely welded to the bus bar 600. However, the electrode terminal 140 may include a bolt terminal so that the electrode terminal 140 can be fixed to the bus bar 600 by screw fastening. The electrode terminal 140 is made of aluminum, an aluminum alloy, copper, a copper alloy, or the like.

The gasket 150 is disposed between the electrode terminal 140 and the lid body 130 and between the lid body 130 and the current collector. The gasket 150 is a member for securing electrical insulation and gas tightness between the electrode terminal 140 and the lid body 130 and between the lid body 130 and the current collector. The gasket 150 is made of an insulating material such as PP, PE, PPS, PET, PEEK, PFA, PTFE, PBT, PES, or an ABS resin.

The electrode assembly is an energy storage element (power generating element) formed by stacking the positive electrode plate, the negative electrode plate, and a separator to each other. In the embodiment, the positive electrode plate that the electrode assembly includes is formed such that a positive active material layer is formed on a positive electrode substrate layer that is an elongated strip-shaped current collecting foil made of metal such as aluminum or an aluminum alloy. The negative electrode plate is formed such that a negative active material layer is formed on a negative electrode substrate layer that is an elongated strip-shaped current collecting foil made of metal such as copper or a copper alloy. As a positive active material used for forming the positive active material layer and a negative active material used for forming the negative active material layer, known materials can be appropriately used provided that these materials can occlude and discharge lithium ions. The current collectors (the positive electrode current collector and the negative electrode current collector) are members having conductivity and rigidity and are electrically connected to the electrode terminals 140 and the electrode assembly. The positive electrode current collector is made of aluminum, an aluminum alloy, or the like similarly to the positive electrode substrate layer of the positive electrode plate. The negative electrode current collector is made of copper, a copper alloy, or the like similarly to the negative electrode substrate layer of the negative electrode plate.

### [3 Description of configuration of spacer 200]

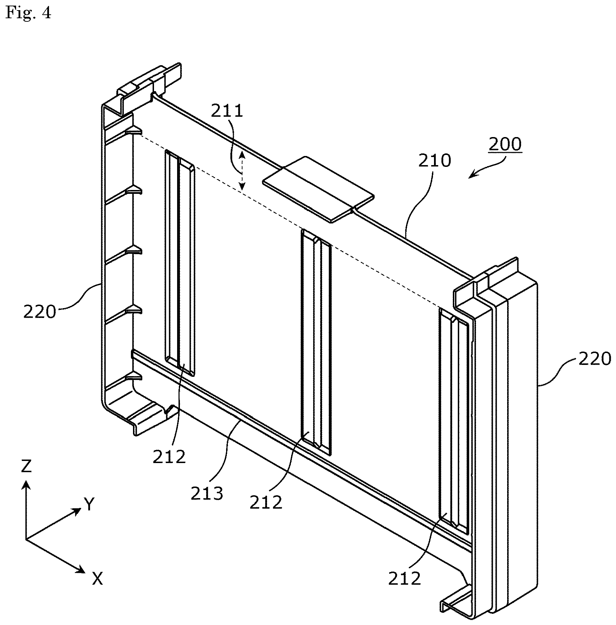

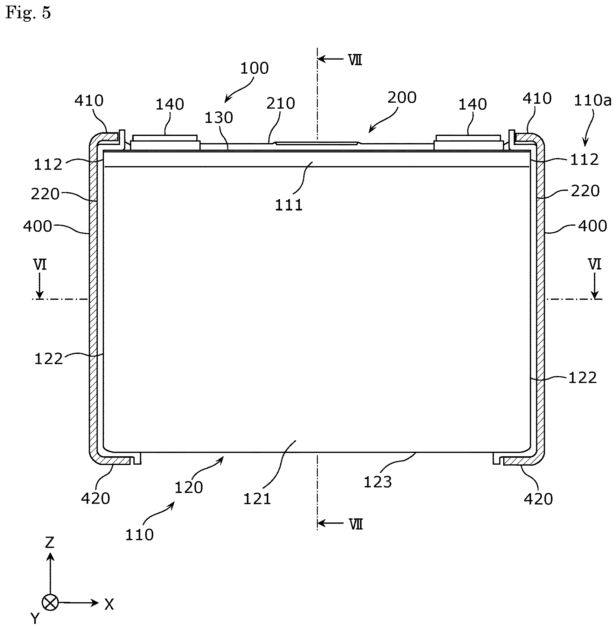

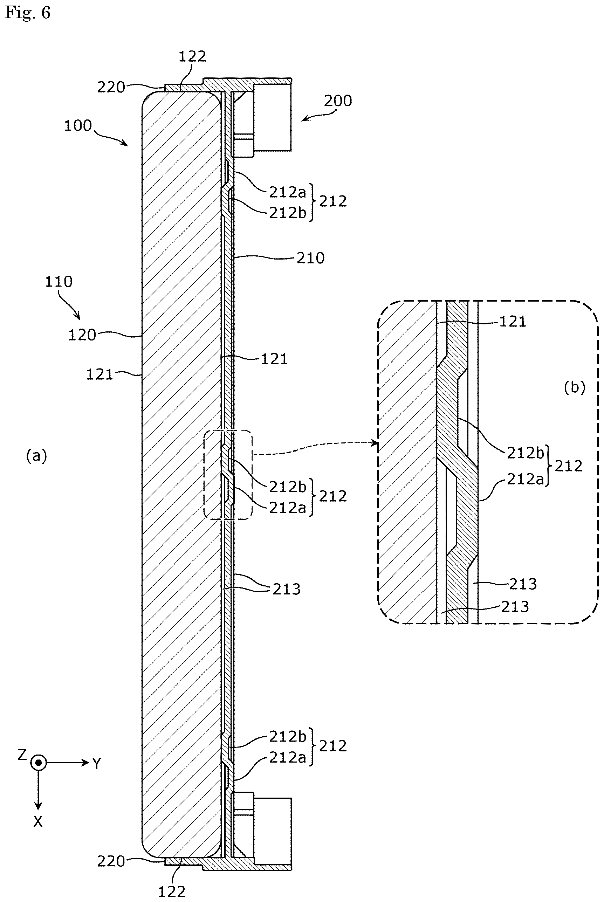

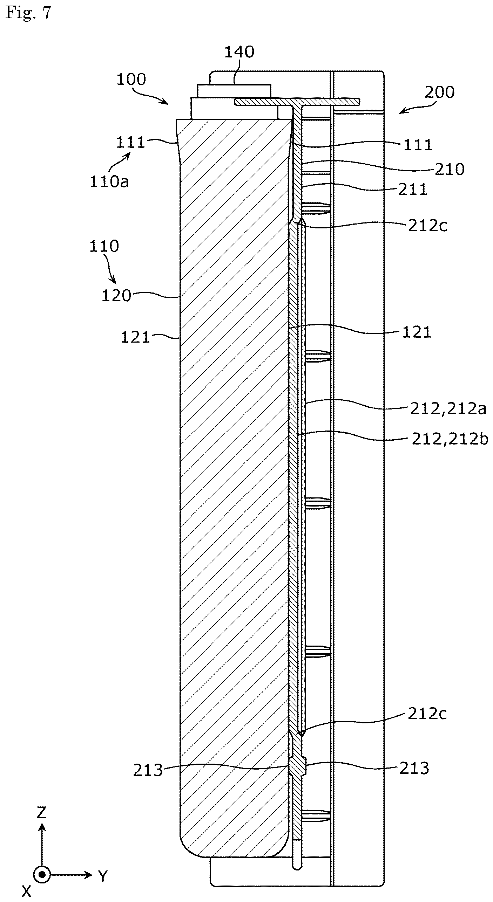

Next, the configuration of the spacer 200 is described in detail. Fig. 4 is a perspective view illustrating the configuration of the spacer 200 according to the embodiment. More specifically, Fig. 4 is a perspective view illustrating the configuration of the spacer 200 illustrated in Fig. 2 in an enlarged manner. Fig. 5 is a front view illustrating the configuration where the energy storage device 100 is disposed with respect to the spacer 200 according to the embodiment. More specifically, Fig. 5 is a front view illustrating the configuration where a state that the energy storage device 100, the spacer 200, and the side members 400 are assembled to each other is viewed from the Y-axis minus direction side (the side members 400 being illustrated in cross section). Fig. 6 and Fig. 7 are cross-sectional views illustrating the configuration where the energy storage device 100 is disposed with respect to the spacer 200 according to the embodiment. More specifically, Fig. 6 is a cross-sectional view illustrating the configuration obtained by cutting the configuration illustrated in Fig. 5 along a plane parallel to an XY plane that passes a line VI-VI. In Fig. 6, the illustration of the side members 400 is omitted. Fig. 7 is a cross-sectional view illustrating the configuration obtained by cutting the configuration illustrated in Fig. 5 along a plane parallel to a YZ plane that passes a line VII-VII (the cutting position along the line VII-VII being the position where the configuration illustrated in Fig. 5 being cut along a second bulging portion 212b of a bulging portion 212 at the center in the X axis direction in Fig. 6).

As illustrated in these drawings, the spacer 200 includes a spacer body portion 210 and spacer side wall portions 220. The spacer body portion 210 is a portion having a rectangular shape and a flat plate shape, and forms a body of the spacer 200. The spacer body portion 210 is disposed parallel to the XZ plane. As described above, the spacer body portion 210 is disposed in the Y-axis plus direction of the energy storage device 100 or in the Y-axis minus direction of the energy storage device 100. Fig. 5 to Fig. 7 illustrate a state where the spacer body portion 210 is disposed in the Y-axis plus direction (one side of the first direction) of the energy storage device 100.

The spacer side wall portions 220 are wall portions that are disposed at end portions of the spacer 200 in the X axis direction in an extending manner in the Z axis direction, and are disposed so as to cover end portions of the energy storage device 100 in the X axis direction. In the embodiment, two spacer side wall portions 220 are disposed at both end portions of the spacer 200 in the X axis direction, and two spacer side wall portions 220 cover both end portions of the energy storage device 100 in the X axis direction. More specifically, these two spacer side wall portions 220 are disposed so as to cover approximately half portions (in the Y axis direction) of: the pair of short side surface portions 122 of the container 110 of the energy storage device 100; both end portions of the lid body 130 in the X axis direction; and both end portions of the bottom surface portion 123 in the X axis direction.

Next, the configuration of the spacer body portion 210 is described in more detail. The spacer body portion 210 includes a flat plate portion 211, bulging portions 212, and protrusions 213.

First, the configuration of the bulging portion 212 is described in detail. The bulging portion 212 is a portion having a bulging shape that extends in the Z-axis plus direction (the second direction intersecting with the first direction) at a center portion of the spacer body portion 210 in the Z axis direction. The bulging portion 212 extends in one direction (Z axis direction) in a straight line shape. The bulging portion 212 does not extend at least to one end portion of the spacer 200 in the Z axis direction (to both end portions in the Z axis direction in the embodiment). In the embodiment, a plurality of (more specifically, three) bulging portions 212 are disposed in a spaced-apart manner in the X axis direction (the third direction that intersects with the first direction and the second direction). That is, between the flat plate portion 211 and the protrusion 213, three bulging portions 212 that are positioned at a center portion and both end portions in the X axis direction are disposed in an extending manner in the Z axis direction.

More specifically, the bulging portion 212 has a shape where the bulging portion 212 bulges in at least one of the Y-axis plus direction (one side in the first direction) and the Y-axis minus direction (the other side of the first direction). In this embodiment, the respective bulging portions 212 bulge in both the Y-axis plus direction and the Y-axis minus direction. As illustrated in Fig. 6 and Fig. 7, the bulging portion 212 has a pair of bulging portions consisting of a first bulging portion 212a and a second bulging portion 212b. As illustrated in Fig. 7, the bulging portion 212 (in Fig. 7, the case where the bulging portion 212 is the second bulging portion 212b being illustrated) has bulging portion side wall portions 212c at end portions in the Z axis direction. The bulging portion side wall portions 212c are wall portions that continuously connect the bulging portion 212 to plate-shaped portions (flat plate portion 211 and the like) disposed above and below the bulging portion 212. The bulging portion side wall portion 212c may be a portion parallel to the Y axis direction. However, in the embodiment, the bulging portion side wall portion 212c is inclined with respect to the Y axis direction. That is, the bulging portion 212 is a portion that bulges from the spacer body portion 210 without forming a gap between the bulging portion 212 and plate-shaped portions (the flat plate portion 211 and the like) around the bulging portion 212 (without forming a penetration hole in the spacer body portion 210). As described above, the bulging portion 212 has the structure where the end portion is closed. With such a configuration, the bulging portion 212 has the rigidity and hence, the bulging portion 212 can properly hold the energy storage device 100 when the energy storage apparatus 10 is used.

The first bulging portion 212a is a portion that extends in the Z-axis plus direction (second direction), and bulges in the Y-axis plus direction (one side in the first direction). The first bulging portion 212a extends in one direction (Z axis direction) in a straight line shape. That is, the first bulging portion 212a is a portion of a bulging shape having a concavo-convex structure where a surface of the first bulging portion 212a on the Y-axis minus direction side is recessed, and a surface of the first bulging portion 212a on the Y-axis plus direction side protrudes. The surface of the first bulging portion 212a on the Y-axis plus direction side is formed into a planar surface (flat surface), and the planar surface of the first bulging portion 212a abuts on the long side surface portion 121 of the energy storage device 100 disposed on the Y-axis plus direction side of the spacer 200. Since the first bulging portion 212a has the concavo-convex structure, a space is formed in the recessed portion. Accordingly, when the energy storage device 100 swells, the surface of the first bulging portion 212a on a bulging side (Y-axis plus direction side) is pressed toward the space side (Y-axis minus direction side) and hence, swelling of the energy storage device 100 can be absorbed. In Fig. 6 and Fig. 7, the energy storage device 100 disposed on the Y-axis plus direction side is not illustrated.

The second bulging portion 212b is a portion that is disposed adjacently to the first bulging portion 212a, extends in the Z-axis plus direction (second direction), and bulges in the Y-axis minus direction (the other side in the first direction). The second bulging portion 212b extends in one direction (Z axis direction) in a straight line shape. That is, the second bulging portion 212b is a portion of a bulging shape having the concavo-convex structure where the surface of the second bulging portion 212b on the Y-axis plus direction side is recessed, and the surface of the second bulging portion 212b on the Y-axis minus direction side protrudes. The surface of the second bulging portion 212b on the Y-axis minus direction side is formed into a planar surface (flat surface), and the planar surface of the second bulging portion 212b abuts on the long side surface portion 121 of the energy storage device 100 disposed on the Y-axis minus direction side of the spacer 200. Since the second bulging portion 212b has the concavo-convex structure, a space is formed in the recessed portion. Accordingly, when the energy storage device 100 swells, the surface of the second bulging portion 212b on a bulging side (Y-axis minus direction side) is pressed toward the space side (Y-axis plus direction side) and hence, swelling of the energy storage device 100 can be absorbed.

With respect to the bulging portions 212 positioned at the center portion in the X axis direction and at an end portion on the X-axis plus direction side, the second bulging portion 212b is disposed on the X-axis minus direction side of the first bulging portion 212a. On the other hand, with respect to the bulging portion 212 positioned at an end portion on the X-axis minus direction side, the second bulging portion 212b is disposed on the X-axis plus direction side of the first bulging portion 212a. The positional relationship between the first bulging portion 212a and the second bulging portion 212b is not particularly limited. However, with respect to the bulging portions 212 positioned at both end portions in the X axis direction, as described above, it is preferable that the bulging portions 212 be disposed such that the positional relationship between the first bulging portion 212a and the second bulging portion 212b is symmetrical (reversed). A protruding amount of the first bulging portion 212a and a protruding amount of the second bulging portion 212b are not particularly limited. However, it is preferable that the protruding amount of the first bulging portion 212a in the Y-axis plus direction be equal to the protruding amount of the second bulging portion 212b in the Y-axis minus direction.

The flat plate portion 211 is a portion having a flat plate shape that is disposed at an end portion of the spacer body portion 210 on the Z-axis plus direction side in an extending manner in the X axis direction, and is parallel to the XZ plane. That is, the flat plate portion 211 is disposed in the Z-axis plus direction (one side of the second direction) of the bulging portions 212. More specifically, the flat plate portion 211 is an elongated portion that is disposed in the Z-axis plus direction (one side in the second direction) of the plurality of bulging portions 212 in a state where the flat plate portion 211 extends so as to straddle over the plurality of bulging portions 212. The Z-axis minus direction side (the Z-axis minus direction side of the plurality of bulging portions 212 and the Z-axis minus direction side of the protrusions 213) of the spacer body portion 210 is also a portion having a flat plate shape and hence, the portion can also be defined as a flat plate portion. The flat plate portion is reinforced by the protrusions 213.

As illustrated in Fig. 7, the container protruding portion 110a of the energy storage device 100 is disposed on the flat plate portion 211 in a state where the container protruding portion 110a faces the flat plate portion 211. That is, the container protruding portion 110a is disposed in a protruding manner toward the flat plate portion 211. More specifically, the long side surface protruding portion 111 of the container protruding portion 110a is disposed in a state where the long side surface protruding portion 111 abuts on the flat plate portion 211. To enable such an arrangement, it is preferable that a protruding amount of the container protruding portion 110a in the Y axis direction (the protruding amount of the long side surface protruding portion 111) be equal to protruding amounts of the first bulging portion 212a and the second bulging portion 212b.

The protrusion 213 is an elongated protrusion that is disposed at the end portion of the spacer body portion 210 on the Z-axis minus direction side in an extending manner in the X axis direction (third direction). That is, the protrusion 213 is disposed in the Z-axis minus direction (the other side in the second direction) of the bulging portions 212. More specifically, the protrusion 213 is disposed in the Z-axis minus direction of the plurality of bulging portions 212 in a state where the protrusion extends so as to straddle over the plurality of bulging portions 212. In the embodiment, the protrusions 213 are disposed on both surfaces of the spacer body portion 210 at positions that are opposite to each other in the Y axis direction in a state where the protrusions 213 extend over from one end to the other end of the spacer body portion 210 in the X axis direction. The protrusion 213 is disposed at a position that corresponds to the container protruding portion 110a of the energy storage device 100. That is, the protrusion 213 is disposed parallel to the portion of the container protruding portion 110a of the energy storage device 100 on the long side surface portion 121 side and on a bottom surface side (Z-axis minus direction side) of the energy storage device 100. With such a configuration, an assembled state of the energy storage device 100 and the spacer 200 becomes more stable.

A distal end surface (a surface on the Y axis direction side) of the protrusion 213 is formed into a planar surface (flat surface), and the planer surface of the protrusion 213 abuts on the long side surface portion 121 of the energy storage device 100. To provide such a configuration, it is preferable that a protruding amount of the protrusion 213 in the Y axis direction be equal to protruding amounts of the first bulging portion 212a and the second bulging portion 212b. The protruding amount of the protrusion 213 in the Y axis direction is equal to a size in the Y axis direction from the long side surface portion 121 to a distal end of the container protruding portion 110a of the energy storage device 100. In other words, the position of a main surface of the spacer body portion 210 in the Y axis direction is set such that the position agrees with the position of a distal end of the container protruding portion 110a in the Y axis direction. The main surface of the spacer body portion 210 is a surface of the spacer body portion 210 around the bulging portions 212. The main surface may also be referred to as an outer surface of the flat plate portion 211, a surface between a plurality of bulging portions 212, a surface disposed adjacently to the bulging portions 212, or the like.

The above-mentioned concept that the spacer 200 and the energy storage device 100 "abut on each other" includes not only a case where the spacer 200 and the energy storage device 100 always abut on each other but also a case where, although a gap is formed between the spacer 200 and the energy storage device 100 in a usual state, the spacer 200 and the energy storage device 100 abut on each other when vibration or an impact is applied from the outside.

In the embodiment, the energy storage apparatus 10 does not include a ventilation structure for actively ventilating the energy storage device 100. The energy storage apparatus 10 of this embodiment is applicable to a case where the heat generation by the energy storage device 100 is small or a case where the energy storage apparatus 10 is cooled by a cooling plate or the like through which a cooling medium flows. On the other hand, when the energy storage apparatus 10 includes the ventilation structure for cooling the energy storage device 100, the following configuration may be adopted.

By allowing the spacer 200 to have the configuration where the spacer 200 has the bulging portions 212 and the flat plate portion 211, spaces disposed adjacently to the bulging portions 212 may be used as ventilation passages that communicate with the outside of the energy storage apparatus 10. In the configuration where the spacer 200 includes the protrusions 213, the protrusion 213 may not be formed in a shape where the whole protrusion 213 extends continuously, but may be formed in a discontinuous shape where the protrusion 213 is partially interrupted and discontinuous portions are used as ventilation passages. When the extending direction of the bulging portions 212 is a direction (the Z axis direction in the embodiment) that intersects with an upper surface of the lid body 130 of the energy storage device 100, from a viewpoint of a ventilation passage to the energy storage device 100, the energy storage device 100 may not include the container protruding portion 110a. When the extending direction of the bulging portions 212 is parallel to the upper surface of the lid body 130, an opening may be formed in the spacer side wall portion 220, and the side member 400 may be formed in a shape where a space disposed adjacently to the bulging portion 212 communicates with the outside of the energy storage apparatus 10. More specifically, an opening that communicates with the outside may be formed in the side member 400, or the side member 400 may be formed in a band shape (strip shape) or a rod shape (bar shape) in place of a plate shape that is adopted in the embodiment.

### [4 Description of Effects]

As described above, according to the energy storage apparatus 10 of the embodiment, the spacer 200 includes: the bulging portions 212 that extend in the second direction (Z axis direction); and the flat plate portion 211 that is disposed on one side of the bulging portions 212 in the second direction. As described above, with respect to the spacer 200, by arranging the flat plate portion 211 in the extending direction (Z axis direction) of the bulging portions 212, even when the bulging portions 212 are indented, the flat plate portion 211 can suppress the spacer 200 from being stretched in the direction (X axis direction) that intersects with the extending direction of the bulging portions 212. With such a configuration, even when the energy storage device 100 swells so that the spacer 200 is pressed against the energy storage device 100, it is possible to suppress the deformation of the spacer 200.

When the energy storage device 100 swells, the spacer 200 made of a resin is likely to be deformed in a stretching manner. In the embodiment, since the bulging portions 212 extend in the Z axis direction, the spacer 200 is likely to be deformed in the X axis direction. However, as illustrated in Fig. 5 and the like, the side members 400 are disposed (abut) on both sides of the spacer 200 in the X axis direction and hence, the deformation of the spacer 200 in the X axis direction is restricted. On the other hand, when the bulging portions 212 extend in the X axis direction, the spacer 200 is likely to be deformed in the Z axis direction. However, only portions of the side members 400 (the protruding portions 410 and 420 in Fig. 5) are disposed on both sides of the spacer 200 in the Z axis direction and hence, the spacer 200 is liable to be deformed in the Z axis direction. The protruding portion 410 is a portion that is formed on an end portion of the spacer 200 on the Z-axis plus direction side, and protrudes toward the inside (energy storage device 100 side). The protruding portion 420 is a portion that is formed on an end portion of the spacer 200 on the Z-axis minus direction side, and protrudes toward the inside (energy storage device 100 side). When the side member 400 does not have the protruding portions 410 and 420, the spacer 200 is more liable to be deformed in the Z axis direction. As described above, in the embodiment, the deformation of the spacer 200 can be suppressed by the flat plate portion 211. On the other hand, the side members 400 are disposed (abut) on the entire side surfaces of the spacer 200 on both sides of the spacer 200 in the X axis direction and hence, the deformation of the spacer 200 in the X axis direction can be more effectively suppressed.

The side members 400 may not abut on the entire side surfaces of the spacer 200 in the X axis direction as in the embodiment. The side members 400 may abut on portions of the side surfaces of the spacer 200. The side members 400 may not be limited to members that restrain the energy storage devices 100, and side wall portions of an outer case that houses the energy storage devices 100 may be used as the side members 400. That is, the embodiment also discloses the following energy storage apparatus. The energy storage apparatus includes: the spacers 200 having bulging portions 212 that extend in the Z axis direction; and the side members 400 (as described above, the side members 400 being replaceable with the side wall portions of the outer case or the like) that are disposed in a state where the side members 400 abut on at least portions of the side surfaces of the spacers 200 in the X axis direction. With respect to the spacer 200, regardless of the presence or absence of the flat plate portion 211, the bulging portion 212 may extend to the end portion of the spacer body portions 210 in the Z axis direction.

With respect to the spacer 200, the bulging portion 212 has the first bulging portion 212a that bulges toward one side in the first direction (Y-axis plus direction) and the second bulging portion 212b that bulges toward the other side in the first direction (Y-axis minus direction). As described above, the bulging portions 212 of the spacer 200 bulge in both directions and hence, a stress generated when the energy storage device 100 swells can be further alleviated by the bulging portions 212. Accordingly, when the energy storage device 100 swells, a force that the energy storage device 100 deforms the spacer 200 can be alleviated and hence, the deformation of the spacer 200 can be further suppressed.

The spacer 200 includes a plurality of bulging portions 212 disposed in a spaced-apart manner from each other, and the flat plate portion 211 is disposed on one side of the plurality of bulging portions 212 in the second direction. As described above, since the spacer 200 includes the plurality of bulging portions 212, a stress generated when the energy storage device 100 swells can be dispersed in the plurality of bulging portions 212. With respect to the spacer 200, since the flat plate portion 211 is disposed on one side of the plurality of bulging portions 212 in the second direction, the flat plate portion 211 can suppress the spacer 200 from being stretched even when the respective bulging portions 212 are indented. As a result, the deformation of the spacer 200 can be further suppressed.

The spacer 200 has the bulging portions 212 at the center portion and both end portions of the spacer 200 in the X axis direction.
Accordingly, it is possible to uniformly press the surfaces (long side surface portions 121) of the energy storage devices 100 when the energy storage devices 100 are pressed.

The container protruding portion 110a is formed on the energy storage device 100 and hence, the container protruding portion 110a protrudes toward the flat plate portion 211 of the spacer 200. With such a configuration, it is possible to suppress the interference between the container protruding portion 110a of the energy storage device 100 and the bulging portions 212 of the spacer 200. Accordingly, it is possible to suppress the deformation (damage) of the spacer 200 caused by the interference between the container protruding portion 110a and the bulging portions 212.

The spacer 200 has the protrusions 213 extending in the third direction (X axis direction) on the side of the bulging portions 212. In this manner, by forming the protrusions 213 on the spacer 200, the spacer 200 can be reinforced on the side of the bulging portions 212. Accordingly, the deformation of the spacer 200 can be further suppressed.

### [5 Description of modifications]

The energy storage apparatus 10 according to the embodiment of the present invention has been described above. However, the present invention is not limited to the embodiment. That is, the embodiment disclosed in this specification is illustrative in all aspects, and is not restrictive. The scope of the present invention is defined by claims, and the present invention includes all modifications within the meaning and the scope equivalent to the claims.

In the above-mentioned embodiment, the spacer 200 has three bulging portions 212 at the center portion and both end portions of the spacer 200 in the X axis direction. However, the number of bulging portions 212 is not particularly limited, and may be plural other than three or one. With respect to the arrangement positions of the bulging portions 212, it is preferable that the bulging portions 212 be disposed at an equal interval in the X axis direction. However, the arrangement positions of the bulging portions 212 are not limited to such arrangement positions.

In the above-mentioned embodiment, the bulging portions 212 is formed continuously in the Z axis direction thus having a shape where the bulging portions 212 extends in the Z axis direction. However, the bulging portion 212 may have a shape where the bulging portion 212 extends in the Z axis direction in a state where a plurality of bulging portions are intermittently formed in the Z axis direction.

In the above-mentioned embodiment, the bulging portion 212 is formed such that the first bulging portion 212a and the second bulging portion 212b are formed parallel to each other in the X axis direction. However, the bulging portion 212 may be formed such that the first bulging portion 212a and the second bulging portion 212b are arranged parallel to each other in the Z axis direction. For example, the bulging portion 212 may have a configuration where the X axis direction and the Z axis direction are exchanged in the above-described embodiment. That is, the X axis direction can be defined as the second direction, and although the bulging portions 212 extend in the X axis direction, the bulging portions 212 do not extend to the end portions of the spacer main body portion 210 in the X axis direction so that the flat plate portion is disposed on one side in the X axis direction of the bulging portions 212. The protrusions 213 extend in the Z axis direction. In this case, it is preferable that the protrusions 213 be disposed on both sides of the spacer body portion 210 in the X axis direction. In addition, also with respect to various modifications of the above-mentioned embodiment, the above-mentioned arrangement of the bulging portions 212 and protrusions 213 can also be applied to the modifications by exchanging the X axis direction and the Z axis direction.

In the above-mentioned embodiment, the bulging portion 212 has one first bulging portion 212a and one second bulging portion 212b as a pair of bulging portions. However, the bulging portion 212 may have any number of first bulging portions 212a and any number of second bulging portions 212b. For example, the bulging portion 212 may have the first bulging portions 212a and the second bulging portions 212b as the pair of bulging portions such that the number of first bulging portions 212a and the number of second bulging portions 212b differ from each other. The bulging portion 212 may have a plurality of pairs of first bulging portion 212a and second bulging portion 212b. The bulging portion 212 may have the configuration where the first bulging portion 212a and the second bulging portion 212b do not form a pair, but are arranged randomly from each other. The bulging portion 212 may not have the first bulging portion 212a or the second bulging portion 212b (that is, having either one of the first bulging portion 212a or the second bulging portion 212b). However, it is preferable that the number of first bulging portions 212a and the number of second bulging portions 212b that the bulging portion 212 has be equal.

In the above-mentioned embodiment, with respect to the spacer 200, the protrusions 213 are disposed in the Z-axis minus direction of the bulging portions 212. However, the protrusions 213 may be disposed in the Z-axis plus direction of the bulging portions 212. That is, the protrusions 213 may be formed on the flat plate portion 211. In this manner, the protrusions 213 may be disposed so as to extend in the X axis direction in the Z-axis plus direction (one side in the second direction) or in the Z-axis minus direction (the other side in the second direction) of the bulging portions 212. In the case where the protrusions 213 are disposed in the Z-axis plus direction of the bulging portions 212, when the energy storage device 100 has the container protruding portion 110a as described in the above-mentioned embodiment, it is preferable that the protrusions 213 be disposed at the position avoiding the container protruding portion 110a (at the position avoiding the inclined surface of the container protruding portion 110a).

In the above-mentioned embodiment, the protrusions 213 are disposed on both surfaces of the spacer body portion 210 at positions that are opposite to each other in a state where the protrusions 213 extend over from one end to the other end of the spacer body portion 210 in the X axis direction. However, the protrusions 213 may be disposed on both surfaces of the spacer body portion 210 at positions that are not opposite to each other, or the protrusions 213 may be disposed only on one surface of the spacer body portion 210. A length of the protrusion 213 to be extended is not particularly limited. The protrusion 213 may have a shape where the protrusion extends in the X axis direction in a state where a plurality of protrusions are intermittently formed in the X axis direction. The spacer 200 may not have the protrusions 213.

In the above-mentioned embodiment, the energy storage device 100 includes the container protruding portion 110a that is disposed at the end portion of the container 110 on the Z-axis plus direction side as the protruding portion that protrudes toward the flat plate portion 211. However, the position and the shape of the protruding portion that the energy storage device 100 has are not particularly limited. The energy storage device 100 may not have the protruding portion.

In the above-mentioned embodiment, all spacers 200 have the above-mentioned configuration. However, any of the spacers 200 may not have the above-mentioned configuration. The same goes for the energy storage device 100.

In the above-mentioned embodiment, it is unnecessary for the energy storage apparatus 10 to include all constituent elements illustrated in Fig. 2. The energy storage apparatus 10 may not include the end members 300, the side members 400, the bus bar holding member 500, or the substrate 700.

Modes constructed by arbitrarily combining the constituent elements included in the above-mentioned embodiment and the above modification are also included in the scope of the present invention.

The present invention can be realized not only as such an energy storage apparatus 10 but also as the spacer 200 that the energy storage apparatus 10 includes.

### INDUSTRIAL APPLICABILITY

The present invention is applicable to an energy storage apparatus or the like that includes an energy storage device such as a lithium ion secondary battery.

### DESCRIPTION OF REFERENCE SIGNS

- 10:: energy storage apparatus
- 100:: energy storage device
- 110:: container
- 110a:: container protruding portion
- 111:: long side surface protruding portion
- 112:: short side surface protruding portion
- 120:: container body
- 121:: long side surface portion
- 122:: short side surface portion
- 123:: bottom surface portion
- 130:: lid body
- 131:: gas release valve
- 132:: solution filling portion
- 140:: electrode terminal
- 150:: gasket
- 200:: spacer
- 210:: spacer body portion
- 211:: flat plate portion
- 212:: bulging portion
- 212a:: first bulging portion
- 212b:: second bulging portion
- 212c:: bulging portion side wall portion
- 213:: protrusion
- 220:: spacer side wall portion
- 300:: end member
- 400:: side member
- 400a:: joining member
- 500:: bus bar holding member
- 600:: bus bar
- 610:: external terminal
- 700:: substrate
- 710:: wire

## Claims

1. An energy storage apparatus comprising:
an energy storage device; and
a spacer disposed on one side in a first direction of the energy storage device, wherein
the spacer includes:
a bulging portion extending in a second direction that intersects with the first direction and bulging toward at least one of one side in the first direction and the other side in the first direction; and
a flat plate portion disposed on one side of the bulging portion in the second direction.

2. The energy storage apparatus according to claim 1, wherein
the bulging portion includes:
a first bulging portion extending in the second direction and bulging toward one side in the first direction; and
a second bulging portion disposed adjacently to the first bulging portion, extending in the second direction, and bulging toward the other side in the first direction.

3. The energy storage apparatus according to claim 1 or 2, wherein the spacer includes a plurality of the bulging portions disposed in a spaced-apart manner from each other in a third direction that intersects with the first direction and the second direction, and
the flat plate portion is disposed on one side of the plurality of the bulging portions in the second direction.

4. The energy storage apparatus according to any one of claims 1 to 3, wherein the energy storage device includes a protruding portion that protrudes toward the flat plate portion.

5. The energy storage apparatus according to any one of claims 1 to 4, wherein, the spacer further includes: a protrusion that is disposed on one side of the bulging portion in the second direction or on the other side of the bulging portion in the second direction, and extends in a third direction that intersects with the first direction and the second direction.
